## Europäisches Patentamt

## European Patent Office

## Office européen des brevets

(11) Veröffentlichungsnummer: **0 360 790 B1**

(12) **EUROPÄISCHE PATENTSCHRIFT**

(45) Veröffentlichungstag der Patentschrift: **26.10.94**

(51) Int. Cl.5: **G01K 7/20**

(21) Anmeldenummer: **89890245.7**

(22) Anmeldetag: **21.09.89**

(54) **Verfahren und Vorrichtung zur Messung der Kraftstofftemperatur bei einer elektronisch geregelten Brennkraftmaschine.**

(30) Priorität: **21.09.88 DE 3832101**

(43) Veröffentlichungstag der Anmeldung:
**28.03.90 Patentblatt 90/13**

(45) Bekanntmachung des Hinweises auf die Patenterteilung:
**26.10.94 Patentblatt 94/43**

(84) Benannte Vertragsstaaten:
**AT BE CH DE ES FR GB IT LI NL SE**

(56) Entgegenhaltungen:
**EP-A- 0 170 833**
**DE-A- 3 706 659**
**GB-A- 2 092 223**

(73) Patentinhaber: **ROBERT BOSCH AKTIENGE-SELLSCHAFT**
**Geiereckstrasse 6**
**A-1110 Wien (AT)**

(72) Erfinder: **Augesky, Christian, Dipl.-Ing.**
**Schrankenberggasse 18-20/2/22**
**A-1100 Wien (AT)**

(74) Vertreter: **Matschnig, Franz, Dipl.-Ing.**
**Siebensterngasse 54**
**Postfach 252**
**A-1070 Wien (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren und auf eine Vorrichtung nach den Oberbegriffen der Patentansprüche 1 bzw. 5.

Für die genaue, elektronisch geregelte Kraftstoffzumessung ist sowohl bei Otto- als auch bei Dieselmotoren eine Berücksichtigung der Kraftstofftemperatur erforderlich, da die Mengenmessung volumetrisch erfolgt, für die Kraftstoffverbrennung und die Motorleistung jedoch die Massenströme von Luft und Kraftstoff maßgebend sind. Die Korrektur für die Treibstofftemperatur wird in einem elektronischen Regler entweder bei der Bestimmung der Sollmenge oder bei der Bestimmung der Istmenge vorgenommen.

Beispielsweise ist es aus der DE-OS 31 25 466 bekannt geworden, einen mit dem elektronischen Regler verbundenen Kraftstofftemperatursensor vorzusehen und dessen Ausgangssignal bei der Berechnung der optimalen Einspritzmenge zu berücksichtigen. Bei dem Sensor handelt es sich um einen Thermistor, über dessen Lage im Kraftfahrzeug jedoch nichts ausgesagt wird. Es ist jedoch bekannt, einen Kraftstofftemperatursensor irgendwo in der Kraftstoffleitung oder in einer Einspritzpumpe vorzusehen.

Nachteilig ist hierbei, daß die Kraftstofftemperatur nicht an der Stelle gemessen wird, an der sie sich auf die Mengenmessung auswirkt, d.h., bei einer Mengenmessung über einen Nadelhubsensor einer Einspritzdüse sollte die Temperatur möglichst nahe des Nadelhubsensors gemessen werden. Andererseits bedeutet jeder zusätzliche Sensor eine weitere Fehlerquelle, da z.B. der Bauteil defekt oder eine Verbindungsleitung schadhaft sein können. Weiters ist bei bekannter Temperatursensoren der Zusammenhang zwischen Temperatur und Ausgangssignal stark nicht-linear, was zu Kalibrierungsproblemen beim Einbau und zu ungenauen Messungen führen kann.

Aus der DE-OS 37 26 712 der Anmelderin geht beispielsweise eine Kraftstoffeinspritzdüse mit einem Nadelhubsensor hervor, bei welcher eine Sensorspule in unmittelbarer Nähe der Düsennadel und damit des durchfließenden Kraftstoffes angeordnet ist. Die Sensorspule ist in einem Magnetkreis angeordnet, dessen magnetischer Widerstand sich beim Öffnen oder Schließen der Ventilnadel ändert. Da der Magnetkreis durch einen Vormagnetisierungsstrom in der Sensorspule oder durch einen Permanentmagneten vormagnetisiert ist, werden beim Öffnen bzw. Schließen der Ventilnadel Spannungsimpulse in der Sensorspule induziert, die zur Auswertung an den elektronischen Regler weitergeleitet werden.

Ziel der Erfindung ist die Schaffung eines Verfahrens und einer Vorrichtung, durch welche die Messung der Kraftstofftemperatur möglichst nahe der Stelle der Mengenzumessung und/oder Mengenbestimmung durchgeführt werden kann. Ein weiteres Ziel der Erfindung liegt in einer Messung der Kraftstofftemperatur, die keinen großen zusätzlichen Aufwand und keine Eingriffe in vorhandene Kraftstoffversorgungssysteme erfordert.

Dieses Ziel läßt sich mit einem Verfahren und einer Vorrichtung nach den kennzeichnenden Merkmalen der Ansprüche 1 bzw. 5 erreichen. Weitere Merkmale der Erfindung sind in den abhängigen Unteransprüchen gekennzeichnet.

Die Erfindung, deren Ausgangspunkt die Verwendung der Sensorspule des Nadelhubsensors auch zur Temperaturmessung ist, ermöglicht es, die Messung der Kraftstofftemperatur an der Stelle der Mengenzumessung bzw. Mengenbestimmung mit hoher Genauigkeit und bei geringem Aufwand durchzuführen. Es sind hierbei keinerlei mechanische Eingriffe in bereits vorhandene Motoren und deren Kraftstoffversorgung erforderlich.

Die Erfindung samt ihren weiteren Vorteilen ist im folgenden an Hand beispielsweiser Ausführungsformen näher erläutert, die in der Zeichnung veranschaulicht sind. In dieser zeigen Fig. 1 die beispielsweise Anordnung der Sensorspule eines Nadelhubsensors in einem Schnitt durch einen Teil einer Einspritzdüse, Fig. 2 in einem Blockschaltbild die prinzipielle Auswertung der an der Sensorspule auftretenden Signale, die Fig. 3a bis c Varianten der Stromversorgung der Sensorspule und Fig. 4 ein Ablaufdiagramm für die Berechnung der Kraftstofftemperatur unter Zuhilfenahme eines Kalibriervorganges.

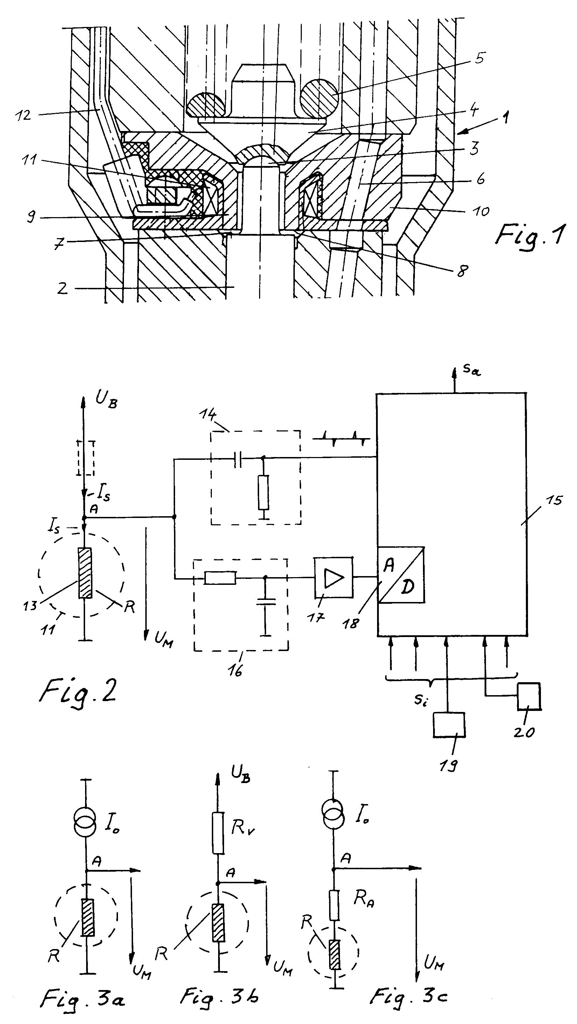

In Fig. 1 ist ein Teil einer Einspritzdüse 1 gezeigt, in welcher eine Düsennadel 2 an ihrem oberen Ende einen Druckzapfen 3 trägt. An diesem greift über einen Federteller 4 eine Druckfeder 5 an. Die in Längsrichtung gegen die Kraft der Feder 5 verschiebliche Düsennadel 2 sitzt in bekannter, hier nicht gezeigter Weise am unteren Ende der Einspritzdüse mit einem Dichtkegel auf einem Ventilsitz.

Über einen Kanal 6 wird dem Ventilsitz Kraftstoff zugeführt. Bei genügendem Anstieg des Kraftstoffdruckes hebt sich die Düsennadel 2. Hierbei bewegt sich eine Ringschulter 7 der Düsennadel 2 bis zu einer Stirnfläche 8 eines ringförmigen Abschnittes 9 einer Zwischenplatte 10 aus ferromagnetischem Material.

Der Abschnitt 9 ist von einer Sensorspule 11 umgeben, deren Anschlüsse über eine Leitung 12 nach außen geführt sind. Um ein Magnetfeld aufzubauen, ist entweder die Sensorspule 11 von Gleichstrom durchflossen, oder es ist, beispielsweise am Federteller 4, ein kleiner Permanentmagnet vorgesehen. Bei der oben beschriebenen Bewegung der Düsennadel 2 wird der magnetische Widerstand des für die Sensorspule 11 wirksamen Magnetkreises geändert und in der Sensorspule 11 wird ein Nadelhubsignal induziert.

Nähere Einzelheiten und weitere Ausführungsmöglichkeiten sind in der bereits genannten DE-OS 37 26 712 und der dort zum Stand der Technik genannten DE-OS 29 32 480 ausführlich beschrieben.

In Fig. 2 ist die Wicklung 13 der Sensorspule 11 schematisch als Widerstand dargestellt, der einen ohmschen Anteil R besitzt. Dieser Widerstand ist temperturabhängig und ergibt sich in erster Näherung als

$$R\,(T)\ =\ R_{25}\,(1\,+\,\alpha\,\Delta\,T) \qquad (1)$$

$$\text{mit}\ \Delta\,T\ =\ T\,-\,25 \qquad (2)$$

hierbei bedeuten:

$R_{25}$     Widerstand der Spule bei 25° C

T       Temperatur der Spule in °C

$\alpha$       Temperaturkoeffizient

Für übliche Spulendrähte, meist Kupfer, und den in Frage kommenden Temperaturbereich ist die lineare Darstellung des Widerstandsverlaufes bei weitem ausreichend genau. Für Kupfer gilt ein Temperaturkoeffizient $\alpha$ von etwa $4.10^{-3.}$

Die Wicklung 13 der Sensorspule 11 liegt über einen strichliert eingezeichneten Vorwiderstand gemäß Fig. 2 an einer Versorgungsspannung $U_B$ und wird von einem Strom $I_s$ durchflossen. Alternativ kann gemäß Fig. 3a eine Stromquelle $I_o$ für die Speisung der Wicklung 13 vorgesehen sein.

Die Signalspannung an Punkt A der Wicklung 13 wird in einen Wechselspannungsanteil und in einen Gleichspannungsanteil $U_M$ aufgespalten. Zu diesem Zweck ist ein Hochpaß 14, hier als einfaches RC-Glied schematisch dargestellt, vorgesehen, über den die Nadelhubimpulse an einen elektronischen Regler 15 weitergeleitet und dort ausgewertet werden.

Der Gleichspannungsanteil $U_M$ gelangt über einen Tiefpaß 16, gleichfalls als RC-Glied schematisch angedeutet, und gegebenenfalls über einen Verstärker 17 ebenso zu dem elektronischen Regler 15, in dem das Gleichspannungssignal zweckmäßigerweise in einem Analog-Digital-Umsetzer 18 in digitale Form aufbereitet wird. Aus diesem digitalen Signal kann nach verschiedenen Berechnungsverfahren bzw. Algorithmen aus der bekannten Temperaturabhängigkeit des Wicklungswiderstandes R(T) die Wicklungstemperatur und damit die Treibstofftemperatur berechnet werden.

Dem Regler 15 werden überdies noch andere Signale $S_i$ zugeführt, insbesondere ein Drehzahlsignal, das Signal eines Fahrpedal-Stellungsgebers und für andere Betriebsgrößen repräsentative Signale. Auch können dem Regler 15 die Signale eines Temperatursensors 19, der die Luft- bzw. Umgebungstemperatur mißt, sowie eines weiteren Temperatursensors 20, der die Motor(Kühlwasser)temperatur mißt, zugeführt werden. Der Regler 15 errechnet aus diesen Signalen vor allem ein Ausgangssignal $s_a$ zur Ansteuerung eines Mengenstellgliedes bzw. mehrerer Mengenstellglieder für die Zumessung des Kraftstoffes. Die Gewinnung des Ausgangssignales $s_a$ ist jedoch nicht Gegenstand der vorliegenden Erfindung.

Bei Verwendung einer Konstantstromquelle $I_o$ gemäß Fig. 3a erhält man für die Temperatur T wegen

$$U_M\ =\ R.I_o \qquad (3)$$

$$\Delta T\ =\ T-25\ =\ \frac{1}{\alpha}\left(\frac{U_M}{I_o\,R_{25}}\ -\ 1\right) \qquad (4)$$

Die konstanten Werte für $\alpha$, $I_o$ und $R_{25}$ sind in dem Regler 15 abgespeichert, sodaß die Kraftstofftemperatur T problemlos errechnet und ihr Wert als Parameter bei der Regelung der Brennkraftmaschine berücksichtigt werden kann.

Voraussetzung ist ein konstanter Strom $I_o$ und ein genaues Einhalten des Widerstandswertes der Wicklung 13 bei der Fertigung.

Bei Speisung über einen Vorwiderstand $R_V$ von einer Spannung $U_B$ gemäß Fig. 3b ergibt sich wegen

$$R = R_V \ \frac{U_M}{U_B - U_M} \qquad (5)$$

aus (1)

$$T - 25 = \Delta T = \frac{1}{\alpha}\left(\frac{R_V}{R_{25}} \ \frac{U_M}{U_B - U_M} - 1\right) \quad (6)$$

Die Berechnung der Temperatur T erfolgt auch in diesem Fall aus dem Gleichspannungssignal $U_M$ unter Berücksichtigung der konstanten Werte $\alpha$, $R_V$, $R_{25}$ und $U_B$.

Da die Einhaltung eines genauen Widerstandswertes $R_{25}$ der Wicklung 13 bei der Fertigung der Sensorspule 11 relativ aufwendig ist, kann die Verwendung eines externen Abgleichwiderstandes $R_A$ gemäß Fig. 3c angebracht sein. Mit Hilfe dieses Widerstandes $R_A$ wird der Wert $R_A$ + R auf einen Nominalwert

$$R_N = R_A + R_{25} \qquad (7)$$

eingestellt.

Da man für $R_A$ einen weitgehend temperaturunabhängigen Widerstand wählt, ergibt sich aus (1), (3) und (7)

$$U_M = I_o[R_A + R_{25}(1 + \alpha \Delta T)] \qquad (8)$$

Da $R_N = R_A + R_{25}$ = const., und zwar für jedes Sensorexemplar, ergibt sich

$$U_M = I_o [R_N + R_{25} \alpha \Delta T] \qquad (9)$$

$$R_{25} = R_{25soll} + \Delta R_{25} \qquad (10)$$

wobei $\Delta R_{25}$ die Abweichung (Fertigungstoleranz) des Wertes $R_{25}$ von seinem Sollwert und $R_{25soll}$ den bei der Fertigung des Sensors angestrebten Sollwert bedeuten.

Da $R_N$ konstant ist, ergibt sich ein Wert für den Abgleichwiderstand $R_A$ mit:

$$R_A = R_{Asoll} - \Delta R_{25} \qquad (11)$$

Aus (8), (10) und (11) erhält man sodann

$$U_M = I_o [R_N + R_{25soll}.\alpha. \Delta T + \Delta R_{25}.\alpha. \Delta T] \qquad (12)$$

Aus dieser Gleichung zeigt sich, daß der relative Fehler von $R_{25}$ in die Messung von $\Delta T$ direkt eingeht.

Da jedoch bei Raumtemperatur (25 °C) der Fehler völlig eliminiert ist, ergeben sich auch bei anderen Temperaturen geringere Fehler als bei einer Anordnung ohne Abgleichwiderstand.

Eine weitere Möglichkeit zur Ermittlung der Kraftstofftemperatur besteht darin, eine Kalibrierungsmessung zu einem Zeitpunkt durchzuführen, zu dem die Motor- und Treibstofftemperatur der Außentemperatur entspricht, d.h. vor oder während eines Kaltstarts. Dieses Verfahren, daß allerdings die Messung der Außentemperatur voraussetzt, bietet, wie im folgenden gezeigt wird, den Vorteil, daß die Werte der Stromquelle $I_o$ bzw. der Versorgungsspannung $U_B$ und eines Vorwiderstandes $R_V$ für die Berechnung der Kraftstofftemperatur nicht erforderlich sind, jedenfalls nicht bei einer ratiometrischen Analog-Digital-Wandlung der Meßwerte. In diesem Fall wird nämlich die Vergleichsspannung auf die gemeinsame Versorgungsspannung ($U_B$) der Meßanordnung bezogen, sodaß Schwankungen der Versorgungsspannung aus dem Meßergebnis eliminiert werden. Ebensowenig ist ein Abgleich des Wicklungswiderstandes notwendig.

4

Es wird vor oder während eines Kaltstarts die Umgebungs(Luft)temperatur $T_{cal}$ gemessen, wozu der Temperatursensor 19 nach Fig.2 herangezogen wird. Außerdem wird die Spannung $U_{cal}$ an dem Wicklungswiderstand R der Sensorspule 11 gemessen.

Aus (1) und (3) ergibt sich:

$$U_M = I_o R_{25} (1 + \alpha \Delta T) \qquad (13)$$

bzw.

$$U_{Mcal} = I_o R_{25} (1 + \alpha \Delta T_{cal}) \qquad (14)$$

Nach Division von (13) durch (14) und kurzer Rechnung ergibt sich

$$\Delta T = T - 25 = \frac{1}{\alpha} \left[ \frac{U_M}{U_{Mcal}} (1 + \alpha \Delta T_{cal}) - 1 \right] \qquad (15)$$

In der Gleichung zur Berechnung der Spulen bzw. Treibstofftemperatur sind außer dem Temperaturkoeffizienten noch die Werte $U_{cal}$ und $\Delta T_{cal}$ enthalten. Die beiden letztgenannten Werte wurden bei der Kalibrierungsmessung ermittelt und so dann in einem Speicher des Reglers abgespeichert. Zur laufenden Messung bzw. Berechnung der Treibstofftemperatur T werden diese Werte später abgerufen.

Gleichung (15) läßt sich auch als

$$\Delta T = U_M K_1 - K_2 \qquad (16)$$

mit

$$K_1 = 1 + \left( \frac{1}{\alpha} + \Delta T_{cal} \right) \frac{1}{U_{Mcal}} \qquad (17)$$

$$K_2 = \frac{1}{\alpha} \qquad (18)$$

anschreiben, woraus ersichtlich ist, daß auch hier der Rechenaufwand nicht groß ist, da die Werte von $K_1$ und $K_2$ bloß während des Kalibriervorganges berechnet und sodann abgespeichert werden können. Für die laufende Berechnung nach Gl. (16) kann während des Betriebes einfach auf diese abgespeicherten Werte zurückgegriffen werden. Im übrigen spielt der Rechenaufwand keine große Rolle, da moderne elektronische Regler leistungsfähige und schnelle Mikrorechner beinhalten, die genügend Kapazität und Rechenzeit für "kleine Nebenaufgaben", wie die vorliegende, besitzen. Der elektronische Regler gestattet außerdem die ständige Überprüfung der ermittelten Werte $U_{Mcal}$, $T_{cal}$ und $U_M$ auf Plausibilität und kann bei Auftreten nicht plausibler Werte (z. B. $T_{cal} = 150°C$) solche Werte verwerfen und die Messung wiederholen oder ein Warnsignal abgeben.

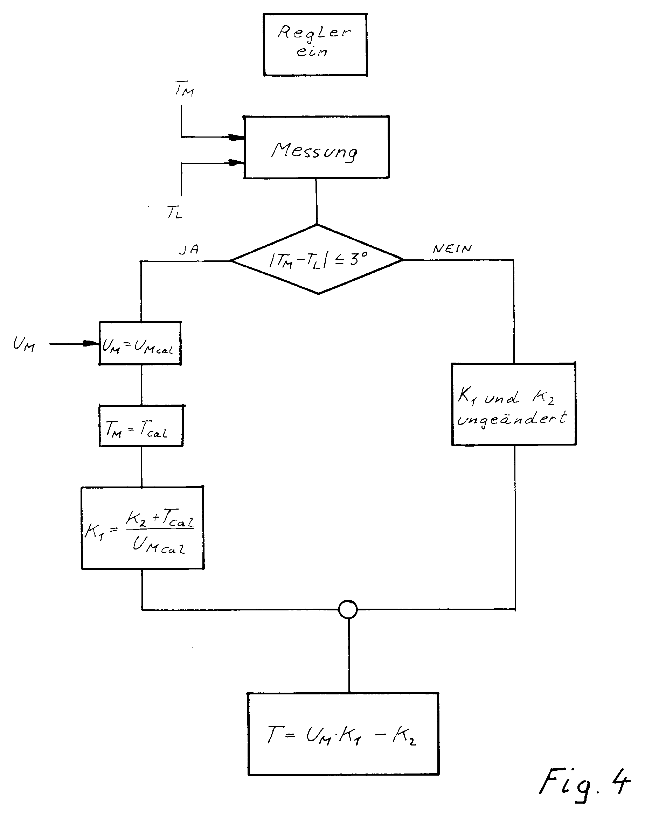

In Fig. 4 ist ein beispielsweises schematisches Ablaufdiagramm für die Berechnung der Kraftstofftemperatur unter Zuhilfenahme eines Kalibriervorganges gezeigt. Nach dem Einschalten des elektronischen Reglers werden die Motor- und die Lufttemperatur $T_M$ bzw. $T_L$ gemessen und sodann miteinander verglichen. Nur dann, wenn die Differenz dieser Temperaturen $T_M$, $T_L$ klein genug ist (Kaltstart) z.B. kleiner als 3°, wird die oben beschriebene Kalibrierungsmessung durchgeführt, andernfalls wird im Betrieb weiterhin auf die abgespeicherten Werte $K_1$, $K_2$ (siehe Gl. 16, 17) zurückgegriffen.

Das Verfahren und die Vorrichtung nach der Erfindung eignet sich besonders für Dieselmotoren, ist jedoch ebenso bei Ottomotoren mit Benzineinspritzung über Einspritzdüsen, von welchen mindestens eine einen Nadelhubsensor besitzt zu verwenden. Bei den Einspritzdüsen kann es sich um übliche Düsen oder auch um sogenannte Pumpedüsen handeln.

5

**Patentansprüche**

1. Verfahren zur Messung der Kraftstofftemperatur bei elektronisch geregelten Brennkraftmaschinen mit Kraftstoffeinspritzung über Einspritzdüsen, von welchen mindestens eine einen Nadelhubsensor mit einer Sensorspule aufweist, dadurch gekennzeichnet, daß der temperaturabhängige Gleichstromwiderstand (R) der Wicklung (13) der Nadelhubsensorspule (11) gemessen und als Maß für die Kraftstofftemperatur (T) herangezogen wird.

2. Verfahren nach Anspruch 1, dadurch gekennzeichnet, daß die Wicklung mit konstantem Gleichstrom ($I_o$) gespeist und die Gleichspannung ($U_M$) an der Wicklung als Maß für die Kraftstofftemperatur (T) gemessen wird.

3. Verfahren nach Anspruch 1 oder 2, dadurch gekennzeichnet, daß als Meßstrom ($I_s$, $I_o$) für die Messung des Spulenwiderstandes der Vormagnetisierungsstrom des Nadelhubsensors herangezogen wird.

4. Verfahren nach einem der Ansprüche 1 bis 3, dadurch gekennzeichnet, daß zu einem Zeitpunkt, zu dem die Umgebungstemperatur zumindest im wesentlichen der Motortemperatur entspricht, insbesondere vor oder während eines Kaltstartes, die Umgebungstemperatur ($T_{cal}$) und die Gleichspannung ($U_{Mcal}$) an der Sensorspule (11) gemessen und abgespeichert werden und sodann während des Betriebes der Brennkraftmaschine die Spannung ($U_M$) an der Sensorspule (11) gemessen und aus dieser, den abgespeicherten Kalibrierwerten ($T_{cal}$, $U_{cal}$) und der bekannten Temperaturabhängigkeit des Wicklungswiderstandes (R) die Kraftstofftemperatur (T) ermittelt wird.

5. Vorrichtung zur Messung der Kraftstofftemperatur bei einer elektronisch geregelten Brennkraftmaschine, die Einspritzdüsen zur Kraftstoffeinspritzung besitzt, wobei von diesen Einspritzdüsen zumindest eine einen Nadelhubsensor mit einer Sensorspule aufweist, dadurch gekennzeichnet, daß eine Stromoder Spannungsquelle ($U_B$, $I_o$) zur Speisung der Wicklung (13) der Sensorspule (11) mit einem Gleichstrom ($I_s$, $I_o$), eine Meßeinrichtung (15, 17, 18) zur Messung der Gleichspannung( $U_M$) an der Sensorspule (11) sowie eine Auswerteschaltung (15) zur Berechnung der Wicklungs- und damit der Kraftstofftemperatur (T) unter Berücksichtigung der bekannten Temperaturabhängigkeit des Wicklungswiderstandes (R) vorgesehen sind.

6. Vorrichtung nach Anspruch 5 mit einer Spannungs- oder Stromquelle zur Speisung der Sensorspule mit einem Vormagnetisierungstrom, dadurch gekennzeichnet, daß der Vormagnetisierungstrom auch Meßstrom ($I_s$, $I_o$) für die Widerstandsmessung der Sensorspule (11) ist.

7. Vorrichtung nach Anspruch 5 oder 6, dadurch gekennzeichnet, daß zumindest ein Teil der Auswerteschaltung in einem elektronischen Regler (15) für die Brennkraftmaschine realisiert ist.

8. Vorrichtung nach einem der Ansprüche 5 bis 7, dadurch gekennzeichnet, daß ein mit der Auswerteschaltung verbundener Umgebungstemperaturfühler (19) vorgesehen ist und die Auswerteschaltung zur Berechnung und Abspeicherung der Umgebungstemperatur ($T_{cal}$) eingerichtet ist.

9. Vorrichtung nach einem der Ansprüche 5 bis 8, dadurch gekennzeichnet, daß in Serie zu der Spulenwicklung (13) ein Abgleichwiderstand ($R_A$) geschaltet ist und die Meßeinrichtung mit dieser Serienschaltung ($R + R_A$) verbunden ist.

**Claims**

1. Process for measuring the fuel temperature in electronically controlled combustion engines with fuel injection by means of injection nozzles, at least one of which has a needle lift sensor with a sensor coil, characterised in that the temperature-dependent direct current resistance (R) of the winding (13) of the needle lift sensor (11) is measured and used as a measure of the fuel temperature (T).

2. Process according to claim 1, characterised in that the winding is supplied with constant direct current ($I_o$) and the direct voltage ($U_M$) at the winding is determined as a measure of the fuel temperature (T).

3. Process according to claim 1 or 2, characterised in that the biasing current of the needle lift sensor is used as the measuring current ($I_s$, $I_o$) for measuring the coil resistance.

4. Process according to one of claims 1 to 3, characterised in that at one point in time, at which the ambient temperature corresponds at least substantially to the engine temperature, particularly before or during a cold start, the ambient temperature ($T_{cal}$) and the direct voltage ($U_{Mcal}$) at the sensor coil (11) are measured and stored and then during operation of the combustion engine, the voltage ($U_M$) at the sensor coil (11) is measured and the fuel temperature (T) is determined from this, the stored calibration values ($T_{cal}$, $U_{cal}$) and the known temperature dependence of the winding resistance (R).

5. Device for measuring the fuel temperature in an electronically controlled combustion engine which has injection nozzles for fuel injection, at least one of these injection nozzles having a needle lift sensor with a sensor coil, characterised in that a current source or a voltage source ($U_B$, $I_o$) for supplying the winding (13) of the sensor coil (11) is provided with direct current ($I_s$, $I_o$), a measuring device (15, 17, 18) for measuring the direct voltage ($U_M$) at the sensor coil (11) and an evaluation circuit (15) are provided for calculating the winding temperature and hence the fuel temperature (T) taking into account the known temperature dependence of the winding resistance (R).

6. Device according to claim 5 having a voltage source or current source for supplying the sensor coil with a biasing current, characterised in that the biasing current is also the measuring current ($I_s$, $I_o$) for resistance measurement of the sensor coil (11).

7. Device according to claim 5 or 6, characterised in
that at least one part of the evaluation circuit is realised in an electronic controller (15) for the combustion engine.

8. Device according to one of claims 5 to 7, characterised in that an ambient temperature sensor (19) associated with the evaluation circuit is provided and the evaluation circuit is equipped to calculate and store the ambient temperature ($T_{cal}$).

9. Device according to one of claims 5 to 8, characterised in that a balancing resistance ($R_A$) is connected in series with the coil winding (13) and the measuring device is connected to this series circuit ($R + R_A$).

**Revendications**

1. Procédé pour mesurer la température du carburant dans des moteurs à combustion interne à régulation électronique avec injection du carburant par des injecteurs dont au moins un présente un détecteur de la levée du téton avec une bobine de détecteur, **caractérisé** en ce qu'on mesure la résistance ohmique (R), fonction de la température, de l'enroulement (13) de la bobine (11) du détecteur de levée du téton, et on s'en sert comme mesure de la température (T) du carburant.

2. Procédé selon la revendication 1, **caractérisé** en ce qu'on alimente l'enroulement en courant continu constant ($I_o$), et on mesure la tension continue ($U_M$) à l'enroulement comme mesure de la température (T) du carburant.

3. Procédé selon la revendication 1 ou 2, **caractérisé** en ce qu'on utilise, comme courant de mesure ($I_s$, $I_o$) pour la mesure de la résistance de la bobine, le courant de préaimantation du détecteur de levée du téton.

4. Procédé selon l'une quelconque des revendications 1 à 3, **caractérisé** en ce qu'à un moment où la température ambiante correspond au moins sensiblement à la température du moteur, notamment avant ou pendant un démarrage à froid, on mesure et on mémorise la température ambiante ($T_{cal}$) et la tension continue ($U_{Mcal}$) à la bobine (11) du détecteur, puis on mesure la tension ($U_M$) à la bobine (11) du détecteur pendant le fonctionnement du moteur à combustion interne, et on détermine la température (T) du carburant à partir de cette tension, des valeurs d'étalonnage mémorisées ($T_{cal}$, $U_{cal}$) et de la dépendance connue à la température de la résistance (R) de la bobine.

**5.** Dispositif pour mesurer la température du carburant dans un moteur à combustion interne à régulation électronique qui possède des injecteurs pour l'injection du carburant, au moins un de ces injecteurs présentant un détecteur de la levée du téton avec une bobine de détecteur, **caractérisé** en ce qu'il est prévu une source de courant ou de tension ($U_B$, $I_o$) pour alimenter l'enroulement (13) de la bobine (11) du détecteur en courant continu ($I_s$, $I_o$), un dispositif de mesure (15, 17, 18) pour mesurer la tension continue ($U_M$) à la bobine (11) du détecteur, ainsi qu'un montage évaluateur (15) pour calculer la température de l'enroulement, et par suite la température (T) du carburant, en tenant compte de la dépendance connue à la température de la résistance (R) de l'enroulement.

**6.** Dispositif selon la revendication 5 avec une source de tension ou de courant pour alimenter la bobine du détecteur en courant de préaimantation; **caractérisé** en ce que le courant de préaimantation est également le courant de mesure ($I_s$, $I_o$) pour la mesure de la résistance de la bobine (11) du détecteur.

**7.** Dispositif selon la revendication 5 ou 6, **caractérisé** en ce qu'au moins une partie du montage évaluateur est réalisée dans un régulateur électronique (15) pour le moteur à combustion interne.

**8.** Dispositif selon l'une quelconque des revendications 5 à 7, **caractérisé** en ce qu'il est prévu un capteur de température ambiante (19) relié au montage évaluateur, et le montage évaluateur est conçu pour calculer et mémoriser la température ambiante ($T_{cal}$).

**9.** Dispositif selon l'une quelconque des revendications 5 à 8, **caractérisé** en ce qu'une résistance de compensation ($R_A$) est montée en série avec l'enroulement (13) de la bobine, et le dispositif de mesure est relié à ce montage en série ($R + R_A$).

Fig.1

Fig.2

Fig.3a    Fig.3b    Fig.3c

Fig. 4